# DEMANDE DE BREVET EUROPEEN

(11) **EP 0 528 712 A1**
(43) Date de publication de la demande: **24.02.1993**
(21) Numéro de dépôt: 92402186.8
(22) Date de dépôt: 30.07.1992
(51) Int. Cl.: G01K 11/06

(54) **Indicateur de conservation pour produits congelés ou réfrigérés et procédé de mise en oeuvre de cet indicateur**

(30) Priorité: 19.08.1991 FR 9110469
(71) Demandeur: SOCIETE COOL S.a.r.l., F-07800 La Voulte sur Rhône (FR)
(72) Inventeur: Berrebi, Georges, F-26500 Bourg les Valences (FR); Toporenko, Yves, F-75011 Paris (FR)
(74) Mandataire: Andreeff, François

(57) **Abrégé**

L'invention concerne un indicateur de conservation pour produit congelés ou réfrigérés et le procédé de mise en oeuvre de cet indicateur.

L'indicateur est constitué d'un sachet en matière plastique (1) transparente, de faibles dimensions extérieures, dont la partie interne est constituée de deux cavités hermétiques fermées séparément par soudure ou clipsage (2). La cloison interne (3), commune aux deux cavités, est réalisée en tout ou partie au moyen d'un film ou d'une cloison normale déchirable (au moyen d'un fil) (6) ou défonçable et qui sert à armer le dispositif après congélation.

L'une des cavités est remplie de liquide eutectique, l'autre cavité est garnie de papier buvard ou de matière hydrophile. Le sachet est disposé par fixation dans ou sur l'emballage à surveiller, de manière que la cavité (4) qui contient le papier buvard ou la matière hydrophile soit considérée comme surface d'observation.

## Description

La présente invention concerne un dispositif qui permet de reconnaître par un simple examen visuel si un produit froid et surtout surgelé est propre ou non à la consommation.

Les surgelés sont des produits sûrs fabriqués avec une extrême rigueur présentant des intérêts incontestables sur le plan microbiologique (au-dessous de - 18 °C, les microbes ne se développent plus), toutefois des intoxications alimentaires sont possibles, notamment dans le cas où les surgelés sont accidentellement décongelés puis recongelés.

Un acheteur doit pouvoir vérifier qu'un produit n'a subi aucune rupture de la chaîne du froid, car on n'est pas sans ignorer qu'entre le moment où le produit est surgelé et le moment où il est consommé la chaîne du froid peut être rompue en de nombreuses occasions. En effet, à - 18 °C, on stoppe la multiplication des microbes, des levures, et des moisissures. Plus tard à la décongélation, les micro-organismes reprennent une vie intense. Entre le transport des marchandises, des livraisons, la vente et les manipulations de la ménagère, la moindre négligence peut être fatale. De récentes enquêtes au niveau des commerces et des restaurants ont prouvé que la chaîne du froid est rompue dans 30 % des cas (porte d'une armoire réfrigérée mal fermée pendant tout un week-end ou interruption d'électricité, etc.) En dehors de l'examen des boîtes ou des paquets proposés sur le marché des consommateurs, cet examen n'étant d'ailleurs pas fiable, on ne trouve guère que le brevet français relatif aux produits surgelés FR-A-2626072 de Monsieur TOPORENKO proposant un moyen simple et rapide de contrôle de la chaîne du froid, qui consiste à utiliser un petit glaçon de forme géométrique, coloré dans sa masse, fluorescent de surcroît, moulé sur un support, ou maintenu entre des index, le tout étant intégré à l'intérieur d'une minuscule boîte hermétique transparente qui accompagne l'emballage du produit surgelé d'une façon inviolable. La présente invention concerne de nouvelles réalisations pratiques perfectionnées de l'art antérieur en utilisant un mélange liquide apte à contrôler des températures de l'ordre de + 5 °C à - 30 °C. Le dispositif selon l'invention prend en compte non seulement la variation de température, mais également sa durée. Il peut être utilisé pour le froid négatif et le froid positif. Ce dispositif simple et peu coûteux, a l'avantage d'avoir un fonctionnement fiable et irréversible.

La présente invention concerne notamment un dispositif destiné à être adjoint par fixation (collage ou agrafage) à l'intérieur ou à l'extérieur de l'emballage de protection d'un produit réfrigéré à caractère alimentaire industriel ou pharmaceutique.

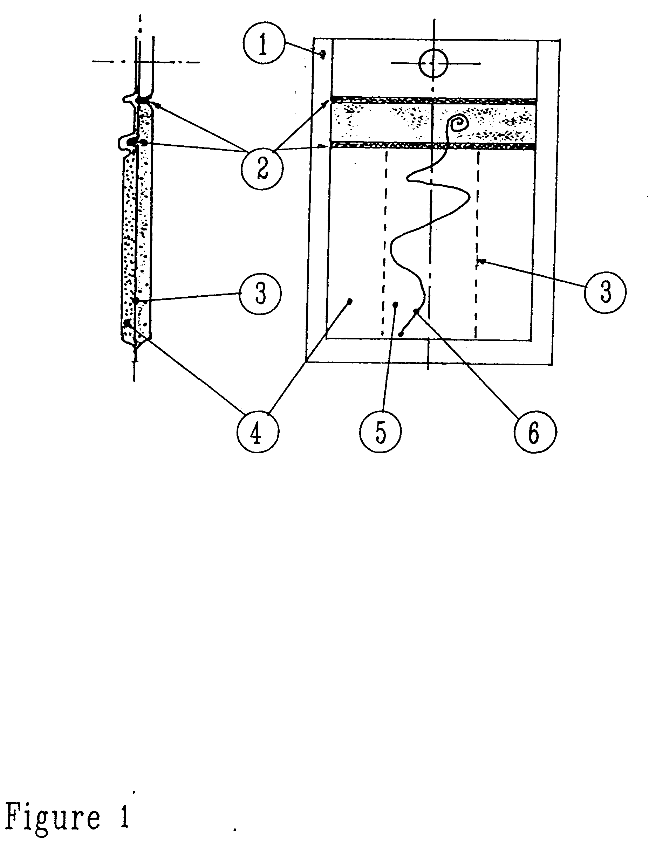

Dans la figure 1, l'indicateur est constitué d'un sachet parallélépipèdique (1) en matière plastique transparente de faibles dimensions extérieures, s'inscrivant au milieu d'une surface d'amarrage ; la partie interne du sachet est constituée par deux cavités hermétiques dont les orifices de remplissage sont séparés, les fermetures (2) étant obtenues par soudure ou par clip. La cloison interne (3) commune aux deux cavités est réalisée en tout ou partie au moyen d'une cloison constituée en tout ou partie par un film ou un écran permettant le remplissage et la congélation. On utilise une cloison ou un film déchirable (au moyen par exemple d'un fil (6)) ou défonçable à la place d'un film ou d'un écran biodégradable à effet retardé, technique décrite dans l'art antérieur, notamment US-A-2490933, GB-A-2225425 ou EP-A-250217.

Un des éléments actifs du dispositif est généré par la déchirure en tout ou partie d'un film qui constitue la cloison (3) commune aux deux cavités, l'une (5) contenant un liquide eutectique, l'autre (4) renfermant une matière absorbante ou adsorbante (papier buvard, coton hydrophile ponce, etc.).

Le remplissage de la cavité (4) du sachet se fait au moyen d'un liquide eutectique approprié. La cavité peut également recevoir une matière hydrophile imprégnée à saturation de liquide eutectique. Les liquides utilisés peuvent être luminescents fluorescents, phosphorescents dont les caractéristiques physiques, point de congélation et de décongélation, prédéterminent l'image thermique ou frigorifique du produit réfrigéré auquel ils sont adjoints.

En phase de congélation le liquide ou la matière eutectique qui se trouve dans la cavité (5) se solidifie, elle reste sans effet vis à vis de la cloison ou film.

En phase de décongélation la masse solidifiée se liquéfie et provoque la disparition du film (3) qui constitue en tout ou partie la cloison et imprègne la matière absorbante ou adsorbante qui se trouve dans l'autre cavité signifiant que la chaîne du froid a été rompue.

La coloration de la matière absorbante ou adsorbante peut éventuellement constituer un masquage dans la lecture du code barres lorsque celui-ci est placé sur la fenêtre d'observation du dispositif.

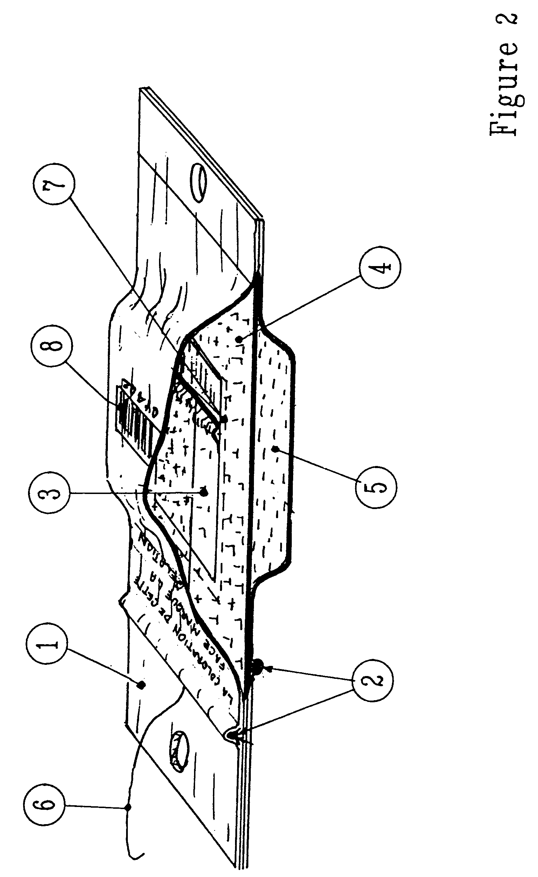

La figure 2 représente à titre d'exemple un autre dispositif équipé d'une cloison déchirable après congélation :
Une enveloppe en matière plastique (1) transparente, fermée par clips ou soudure (2) comporte deux cavités, l'une (5) remplie de liquide eutectique, l'autre (4) de matière absorbante ou adsorbante. L'ensemble ainsi constitué est fixé à l'emballage qui contient le produit à congeler ou à réfrigérer et ce, par agrafage, ou au moyen d'un ruban adhésif. A la sortie du tunnel de congélation, il suffit de tirer sur le fil (6) pour mettre le système en position de veille, en effet cette action provoque la déchirure de la cloison (3) mitoyenne entre les deux cavités (4) et (5).

Si une décongélation volontaire ou involontaire se produit, la masse eutectique congelée se liquéfie et imprègne la matière absorbante ou adsorbante du fait que la cloison de séparation entre les deux cavités est déchirée.

Pour éviter un collage de la cloison à la masse eutectique solidifiée, on a disposé au dos de cette cloison en contact avec le liquide un séparateur (7) en papier paraffiné ou siliconé.

Sur la face d'observation, on dispose un code de lecture (8) (code "barre") qui se trouve masqué lorsque la matière absorbante ou adsorbante se colore, de même une indication imprimée peut apparaître pour rappeler à l'utilisateur que le produit a été décongelé.

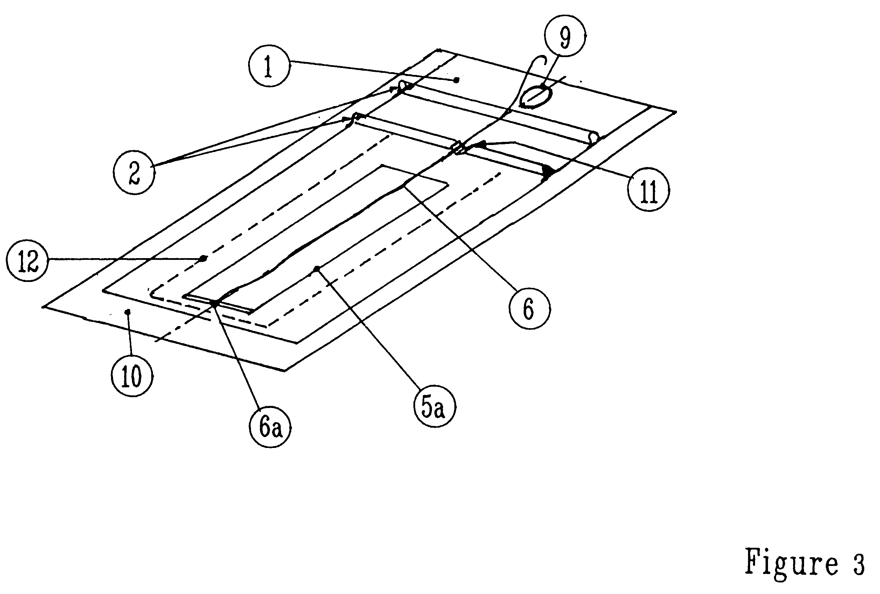

La figure 3 représente la conception d'une cloison utilisée dans le dispositif de la figure 3. Un film en matière plastique souple (1) est muni de clips de fermeture (2) et d'un trou servant à l'amarrage (9) et d'une surface d'amarrage et de soudure (10) destinée à la soudure des autres films appelés à constituer les cavités dont l'une est remplie de liquide eutectique, l'autre étant garnie de matière absorbante ou adsorbante.

Le film (1) possède dans sa partie centrale, une surface amincie dans une zone prédéterminée 5-a dans laquelle se trouve noyé un fil de tirage (6) amarré éventuellement à un renfort 6-a faisant office de barre de découpage.

Le fil (6) passe par une encoche (11) du clip ou de la soudure assurant la fermeture de la cavité garnie de matière absorbante ou adsorbante, la traversée de cette fermeture doit permettre un glissement du fil tout en remplissant la fonction d'un presse étoupe ou d'une garniture d'étanchéité. Au dos de la zone amincie (5-à) est collée ou fixée, au moyen d'un adhésif, un séparateur constitué par une pellicule de papier paraffiné ou siliconé (12) qui empêche le collage de cette partie amincie de la cloison à la masse congelée de liquide eutectique, ce qui facilite l'ouverture de la cloison.

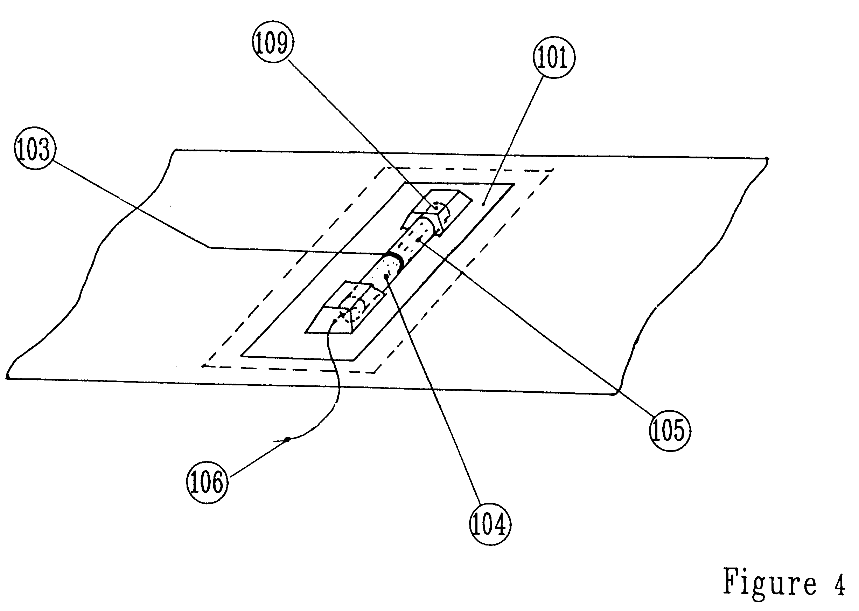

La figure 4 représente un indicateur de décongélation comportant un porte étui en matière plastique (101) incorporé dans une étiquette de positionnement en ruban adhésif pelable. Dans le porte étui (101) se trouve placé un étui constitué par un tube en matière plastique transparente fermé à ses deux extrémités par soudure ou par des bouchons (109). Dans la partie centrale du tube se trouve disposée une cloison déchirable ou défonçable (103) reliée à un fil de traction (106) permettant de placer le dispositif en état de veille lorsque le produit a été congelé. Dans la partie visible de l'indicateur ou distingue nettement la cavité (105) remplie de liquide eutectique et la cavité (104) garnie de matière absorbante ou adsorbante. Lors d'une décongélation accidentelle ou volontaire la totalité du tube se colore à la teinte du liquide eutectique et indique que le produit a été décongelé. Le fil (106) est sectionné au ras du porte étui une fois que le dispositif a été placé en état de veille.

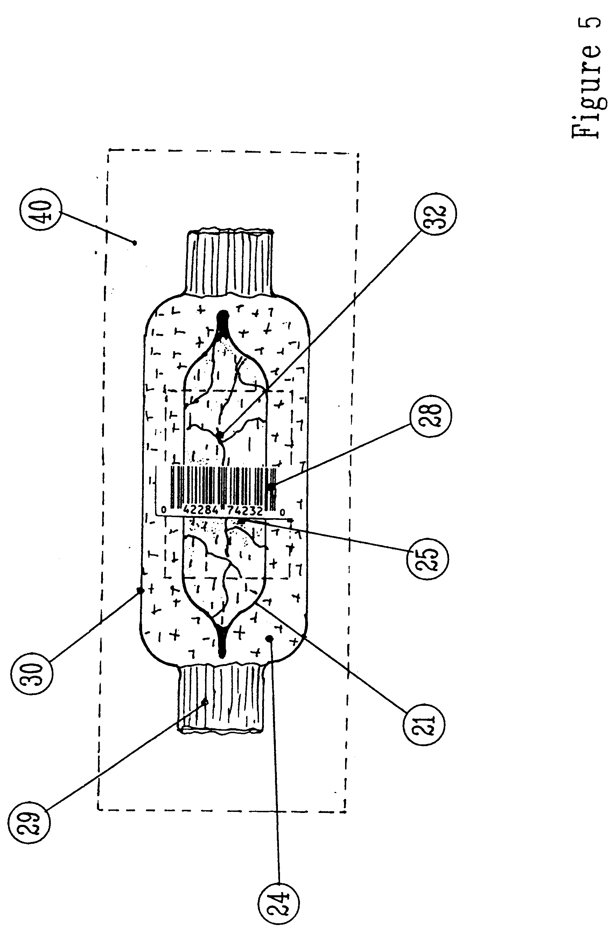

La figure 5 représente une ampoule de verre (21) remplie d'une manière habituelle, c'est-à-dire par exemple à 70 % de sa capacité, d'un liquide eutectique (25), l'ampoule est entourée d'un papier buvard ou d'une matière absorbante ou adsorbante (24), l'ensemble est placé dans un tube en matière plastique souple (30) et transparent soudé ou bouché (29) à ses deux extrémités de manière à le rendre hermétique vis à vis de la matière ou du produit (40) qu'il accompagne.

L'armement du dispositif se fait à la sortie du tunnel de congélation par exemple, quand on sait que la marchandise a été portée à la température de conservation choisie. A l'aide d'un outil approprié (pince ou outil de choc) on procède à l'écrasement de l'ensemble, un simple choc suffit à briser ou défoncer le tube de verre qui se trouve à l'intérieur de l'enveloppe (30) de protection. Si une décongélation accidentelle ou volontaire a lieu, la masse eutectique solidifiée se liquéfie et laisse passer à travers les brisures (32) du tube du liquide qui colore et imprégne la matière absorbante ou adsorbante (24) qui enveloppe le tube (21) ; de plus cette coloration peut masquer le code de lecture (28) dans la mesure ou celui-ci est placé sur la surface d'observation du détecteur. L'ensemble du dispositif peut être maintenu à l'emballage à surveiller au moyen d'un ruban adhésif dans lequel on aura au préalable découpé une fenêtre d'observation.

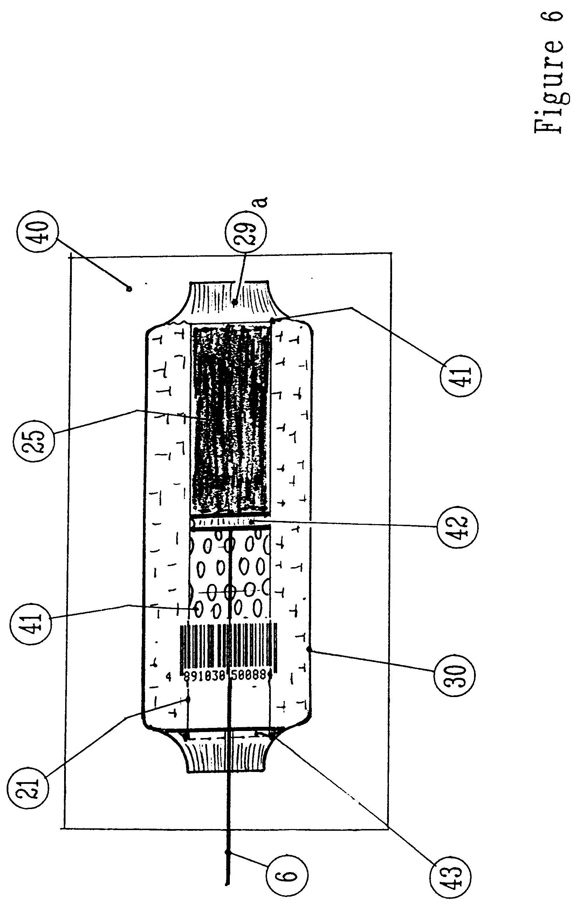

La figure 6 représente un dispositif constitué par un tube cylindrique (21) transparent ou non, disposé dans une enveloppe de protection extérieure 130) en verre ou en matière plastique transparente étanche par soudure ou clip munie de surfaces ou de parties suffisantes pour son amarrage sur le produit consommable à protéger (40).

Le tube intérieur en verre ou en matière plastique transparente ou non est équipé d'un fond (41) lors de sa fabrication. De sa partie médiane en allant vers l'ouverture, le tube possède une multitude d'orifices ou d'ouvertures (41) disposés par exemple en quinconce. Dans la partie basse du cylindre, on emprisonne un liquide généralement eutectique (25) dont le point de congélation est prédéterminé et ce à l'aide d'une cloison coulissante (42) du type piston, reliée éventuellement à une commande mécanique de déplacement, constituée par un fil (6) traversant l'enveloppe de protection extérieure en matière plastique transparente définie ci-dessus. (43) représente le siège prévu dans l'enveloppe extérieure obturé par le recul du piston (42) et assurant l'étanchéité de l'enveloppe extérieure.

Deux effets mécaniques peuvent se produire:

1. La partie basse du tube est remplie d'une manière intégrale, lors de congélation du liquide eutectique ; son expansion provoque le déplacement de la cloison (piston) à tel point que celle-ci se trouve dans la zone perforée du cylindre ; ainsi au cours d'une décongélation accidentelle ou volontaire, le liquide s'écoulera à travers les orifices ou les trous et pourra imprégner et colorer la matière absorbante ou adsorbante qui enveloppe le cylindre et se trouve interposée dans l'espace qui sépare les deux cylindres concentriques.

2. La partie basse du cylindre est remplie de liquide eutectique d'une manière imparfaite ; l'expansion du liquide en phase de congélation n'est pas suffisante pour provoquer le déplacement du piston ou de la cloison ; on fait appel dans ce cas à l'action mécanique extérieure en armant le système, travail accompli par l'industriel dès que la température de conservation a été atteinte.

Les dispositifs décrits ci-dessus concernent des systèmes destinés à accompagner des produits alimentaires mais d'autres applications sont possibles notamment dans le domaine médical ou pharmaceutique (sérums, sang, vaccins, etc.) même si ces produits bénéficient généralement de techniques de conservation très sophistiquées dans les hôpitaux et laboratoires, techniques qui ne peuvent malheureusement pas être adaptables lors de campagnes militaires ou d'assistance à des populations en détresse.

Les liquides utilisables dans la présente invention à titre de témoin de fusion peuvent être ceux décrits dans les deux brevets français de la demanderesse EN 90/14341 et EN 91/00101.

Les figures représentent des modèles d'indicateur d'état de conservation destinés à accompagner des aliments conditionnés dans un emballage rigide (carton ou autre produit) dans lequel a été aménagé un emplacement adapté à recevoir ce dispositif.

Au cours de la fabrication et du conditionnement des produits surgelés en usine, il peut être prévu, à la phase finale des opérations lors de l'emballage, la mise en place d'un indicateur de conservation. Pour répondre à cet impératif une fenêtre sera prévue dans l'emballage afin d'y adapter ce dispositif de manière à le rendre visible et observable de l'extérieur et de ce fait le rend inviolable. Il peut être fait usage d'un adhésif pour maintenir le dispositif sur l'emballage.

L'indicateur d'état est réalisé conformément aux dispositions réglementaires relatives aux matériaux en contact avec des aliments (décret 73-138 du 12 février 1973, J.O. du 15 février 1973) et au caractère alimentaire des différentes substances qu'il contient afin de garantir la sécurité du consommateur en cas d'écoulement hors du dispositif au moment de la décongélation.

L'invention concerne donc, d'une part, un procédé de mise en oeuvre d'un indicateur d'état de conservation pour produit congelé ou réfrigéré de type industriel, médical ou alimentaire, et, d'autre part, un dispositif dans lequel également on réalise au moins une enveloppe en matière plastique, en verre, de forme cylindrique, parallélépipèdique, sphérique (berlingot) à l'intérieur de laquelle on a réalisé des cavités hermétiques, mitoyennes, concentriques (hermétiques l'une par rapport à l'autre, ayant la particularité de posséder une cloison commune pour chacune d'entre elles), dont les ouvertures de remplissage peuvent être fermées par soudure, par clip, ou par des bouchons appropriés, dispositif dans lequel, en outre, on utilise des parois internes ou cloisons déchirables ou enfonçables mécaniquement, électriquement, ou possédant un volet, un obturateur, un clapet à ouverture mécanique automatique, ou à commande extérieure, le dispositif étant caractérisé par la création à partir d'une commande extérieure mécanique ou électrique (boucle en fil conducteur placée sur la partie médiane du tube de verre, ou noyée dans la cloison pour provoquer la destruction de celle-ci, etc.) d'un cisaillement, d'une déchirure, d'une coupure, mettant en communication deux cavités mitoyennes après congélation ou obtention de la température requise pour laquelle on entend exercer une surveillance.

On réalisera des fermetures par clip, soudure, bouchon nécessaires à l'obtention de cloisons étanches, intérieurement ou/et extérieurement.

On assure le remplissage d'une cavité au moyen de liquide eutectique ou de matière saturée de liquide eutectique, cette cavité étant par exemple sandwichée entre deux cavités garnies de matière absorbante ou adsorbante, avec la possibilité de remplir une cavité d'une matière dont le point de goutte et le point de décongélation constituent des barrières de température à ne pas franchir dans un milieu de conservation bien défini et éventuellement supérieur à zéro degré centigrade.

Le dispositif est également caractérisé par le fait qu'en milieu de congélation ou de conservation non respecté pour lequel la matière ou le liquide témoin est utilisé, celui-ci migre vers la ou les cavités garnies de matière absorbante ou adsorbante en colorant, signifiant un changement d'état. On pourra utiliser une enveloppe étanche en matière plastique transparente, conservant ses caractéristiques de souplesse à basse température, et permettant par un écrasement mécanique volontaire de détruire une enveloppe placée en son sein (ampoule de verre, ampoule plastique brisable à basse température) remplie de liquide eutectique ou autre lorsqu'ils sont congelés.

On peut encore utiliser une matière absorbante ou adsorbante compressible, qui permet l'écrasement de l'enveloppe qui les contient. Dans le cas où le produit à surveiller est muni d'un code de lecture, on le dispose sur le dispositif de façon à ce que lorsque la face d'observation de l'indicateur de décongélation se colore lors d'un changement d'état, l'utilisation du système de lecture est entravée. Le dispositif se caractérise encore par le changement de couleur de la matière absorbante ou adsorbante qui se colore par imprégnation de liquide lors d'un changement d'état qui affecte la température ambiante du milieu de conservation du produit qu'il accompagne.

Le dispositif peut se fixer par adhésif, se suspendre, s'agrafer, se coller sur l'emballage du produit à surveiller.

Le dispositif peut aussi être caractérisé par l'utilisation d'un tube en verre ou en matière plastique transparente ou non équipé d'un fond lors de sa réalisation. De sa partie médiane en allant vers l'ouverture, le tube possède une multitude d'orifices ou d'ouvertures disposés ou non en quinconce ; la partie basse du cylindre est réservée au remplissage d'un liquide, emprisonné à l'aide d'une cloison coulissante du type piston relié éventuellement à une commande mécanique extérieure lorsque le remplissage du liquide n'occupe pas intégralement la cavité qui lui est réservée.

Le dispositif est encore caractérisé par l'utilisation d'une cloison coulissante du type piston (en verre, en matière plastique, en caoutchouc) reliée éventuellement à un organe de traction disponible à l'extérieur de l'enveloppe de protection (fil, axe, etc.) permettant de déplacer la cloison ou le piston après congélation du liquide eutectique qui se trouve emprisonné dans la partie basse du tube et permettant de déplacer le piston dans la partie supérieure du cylindre afin de libérer les orifices de la partie haute du cylindre pour que le liquide puisse s'écouler lors d'une décongélation volontaire ou accidentelle et puisse imprégner tout en les colorant les matières absorbantes ou adsorbantes qui entourent le tube.

On peut également réaliser un dispositif caractérisé par l'utilisation d'une cloison en forme de piston qui lorsqu'elle/il se trouve à la partie haute du cylindre déplacé par l'organe de traction assure une étanchéité du cylindre et de l'enveloppe de protection extérieure et ferme le passage du fil de traction évitant un écoulement de liquide hors de l'enceinte de protection qui risquerait de souiller le produit à surveiller.

Pour le dispositif, on pourra utiliser une surface d'observation qui se colore en tout ou partie lorsqu'il y a un changement d'état du produit à surveiller.

## Revendications

1. Dispositif de mise en oeuvre d'un indicateur d'état de conservation pour produit congelé ou réfrigéré de type industriel, médical ou alimentaire.
Dispositif dans lequel on réalise au moins une enveloppe en matière plastique ou en verre ou en matériau équivalent de forme cylindrique, parallélépipèdique, sphérique ou équivalente à l'intérieur de laquelle on a réalisé des cavités hermétiques, mitoyennes, concentriques, (hermétiques l'une par rapport à l'autre, ayant la particularité de posséder une cloison commune pour chacune d'entre elle), dont les ouvertures de remplissage peuvent être fermées par soudure, par clip, ou par des bouchons appropriés, dispositif dans lequel en outre, on utilise des parois internes ou cloisons déchirable(s) ou enfonçable(s) mécaniquement, électriquement, ou possédant un volet, un obturateur, un clapet à ouverture mécanique automatique, ou à commande extérieure, le dispositif étant caractérisé par la création à partir d'une commande extérieure mécanique ou électrique (boucle en fil conducteur placée sur la partie médiane du tube de verre, ou noyée dans la cloison pour provoquer la destruction de celle-ci etc.) d'un cisaillement, d'une déchirure, d'une coupure, mettant en communication deux cavités mitoyennes après congélation, ou obtention de la température requise pour laquelle on entend exercer une surveillance.

2. Dispositif selon la revendication 1 caractérisé par l'utilisation de fermeture par clip, soudure, bouchon nécessaires à l'obtention de cloisons étanches, intérieurement ou et extérieurement.

3. Dispositif selon l'une des revendications 1 à 2 permettant le remplissage d'une cavité au moyen de liquide eutectique ou de matière saturée de liquide eutectique, cette cavité étant sandwichée entre deux cavités garnies de matière absorbante ou adsorbante donc avec la possibilité de remplir une cavité d'une matière dont le point de goutte et le point de décongélation constituent des barrières de température à ne pas franchir dans un milieu de conservation bien défini et éventuellement supérieur à zéro degré centigrade, le dispositif étant caractérisé par le fait qu'en milieu de congélation ou de conservation non respecté pour lequel la matière ou le liquide témoin est utilisé, celui-ci migre vers la ou les cavités garnies de matière absorbante ou adsorbante en colorant, signifiant ainsi un changement d'état.

4. Dispositif selon l'une des revendications 1 à 3 caractérisé par l'utilisation d'une enveloppe étanche en matière plastique transparente, conservant ses caractéristiques de souplesse à basse température, et permettant par un écrasement mécanique volontaire de détruire une enveloppe placée en son sein (ampoule de verre, ampoule plastique brisable à basse température) remplie de liquide eutectique ou autre lorsqu'ils sont congelés.

5. Dispositif selon l'une des revendications 1 à 4 caractérisé par l'utilisation d'une matière absorbante ou adsorbante compressible, qui permet l'écrasement de l'enveloppe qui les contient.

6. Dispositif selon l'une des revendications 1 à 5 caractérisé par la disposition d'un code de lecture sur la face d'observation de l'indicateur de décongélation qui se colore lors d'un changement d'état et exclut l'utilisation du système de lecture.

7. Dispositif selon l'une des revendications 1 à 6 caractérisé par le changement de couleur de la matière absorbante ou adsorbante qui se colore par imprégnation de liquide lors d'un changement d'état qui affecte la température ambiante du milieu de conservation du produit qu'il accompagne.

8. Dispositif selon l'une des revendications 1 à 7 caractérisé par sa possibilité de se fixer par adhésif, de se suspendre, de s'agrafer, de se coller sur l'emballage du produit à surveiller.

9. Dispositif selon l'une des revendications 1 à 8 caractérisé par l'utilisation d'un tube en verre ou en matière plastique transparente ou non équipé d'un fond lors de sa réalisation et caractérisé en ce que de sa partie médiane en allant vers l'ouverture, le tube possède une multitude d'orifices ou d'ouvertures disposés ou non en quinconce, la partie basse du cylindre étant réservée au remplissage d'un liquide, emprisonné à l'aide d'une cloison coulissante du type piston relié éventuellement à une commande mécanique extérieure lorsque le remplissage du liquide n'occupe pas intégralement la cavité qui lui est réservée.

10. Dispositif selon l'une des revendications 1 à 9 caractérisé par l'utilisation d'une cloison coulissante du type piston reliée éventuellement à un organe de traction disponible à l'extérieur de l'enveloppe de protection permettant de déplacer la cloison ou le piston après congélation du liquide eutectique qui se trouve emprisonné dans la partie basse du tube et permettant de déplacer le piston dans la partie supérieure du cylindre afin de libérer les orifices de la partie haute du cylindre pour que le liquide puisse s'écouler lors d'une décongélation volontaire ou accidentelle et puisse imprégner tout en la colorant la matière absorbante ou adsorbante qui entourent le tube.

11. Dispositif selon l'une des revendications 1 à 10 caractérisé par l'utilisation d'une cloison en forme de piston qui lorsqu'elle/il se trouve à la partie haute du cylindre déplacé par l'organe de traction assure une étanchéité du cylindre et de l'enveloppe de protection extérieure et ferme le passage du fil de traction évitant un écoulement de liquide hors de l'enceinte de protection qui risquerait de souiller le produit à surveiller.

12. Dispositif selon l'une des revendications 1 à 11 caractérisé par l'utilisation d'une surface d'observation qui se colore en tout ou partie signe d'un changement d'état.
